(19) Europäisches Patentamt / European Patent Office / Office européen des brevets

(11) **EP 4 242 509 B1**

(12) **EUROPÄISCHE PATENTSCHRIFT**

(45) Veröffentlichungstag und Bekanntmachung des Hinweises auf die Patenterteilung:
**25.02.2026 Patentblatt 2026/09**

(21) Anmeldenummer: **22161607.1**

(22) Anmeldetag: **11.03.2022**

(51) Internationale Patentklassifikation (IPC):
**F16M 11/12** *(2006.01)* **F16M 11/18** *(2006.01)*

(52) Gemeinsame Patentklassifikation (CPC):
**F16M 11/123; F16M 11/18**

(54) **NEIGEVORRICHTUNG ZUM SCHWENKEN VON GEGENSTÄNDEN SOWIE VERWENDUNG DER NEIGEVORRICHTUNG**

TILTING DEVICE FOR PIVOTING OBJECTS AND USE OF THE TILTING DEVICE

DISPOSITIF D'INCLINAISON PERMETTANT DE FAIRE PIVOTER DES OBJETS, AINSI QU'UTILISATION DU DISPOSITIF D'INCLINAISON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.09.2023 Patentblatt 2023/37**

(73) Patentinhaber: **van Riel, Markus**
**8222 Beringen (CH)**

(72) Erfinder: **van Riel, Markus**
**8222 Beringen (CH)**

(74) Vertreter: **Patent- und Rechtsanwälte Behrmann Wagner**
**PartG mbB**
**Hegau-Tower**
**Maggistraße 5 (11. OG)**
**78224 Singen (DE)**

(56) Entgegenhaltungen:
**WO-A1-2017/108997 CN-U- 202 100 903**
**CN-U- 211 315 592 US-B2- 8 616 799**

EP 4 242 509 B1

## Beschreibung

Die vorliegende Erfindung betrifft eine Neigevorrichtung zum Schwenken von Gegenständen um zwei unabhängige Achsen.

Aus dem Stand der Technik sind verschiedene Grundprinzipien bekannt, die ein Schwenken von Gegenständen um zwei Achsen ermöglichen.

Beispielsweise kann mit einer kardanischen Aufhängung, die u.a. zum Ausgleich von Schiffsbewegungen bei der Lagerung eines Schiffskompasses zum Einsatz kommt, eine Neigung oder Verschwenkung des Kompasses um zwei Achsen erreicht werden. Problematisch ist hierbei, dass bei größer werdender Neigung die Ebene der Kompassrose in die Ebene der äußeren Aufhängung eintaucht. Daraus folgt, dass sich nur Gegenstände neigen lassen, deren Abmessungen innerhalb der inneren Aufhängung Platz finden, was die Verwendungen oder Einsatzmöglichkeiten beschränkt.

Weiterhin sind aus dem Stand der Technik Azimut- und Elevationsplattformen oder Azimut- und Elevationsantriebe, beispielsweise für Licht- und Radioteleskope bekannt. Diese haben jedoch den Nachteil, dass teilweise sehr schnelle Bewegungen im Azimut erforderlich werden können, beispielsweise, wenn sich bei einem Licht- oder Radioteleskop ein Beobachtungsobjekt nahe am Zenit vorbeibewegt. Weiterhin sind die bekannten Azimut- und Elevationsantriebe dadurch in ihrem Einsatz begrenzt, dass der Azimut-Antrieb eine hohe Leistungsfähigkeit haben muss oder hohe Leistungen bereitstellen können muss, da der Elevationsantrieb vom Azimut-Antrieb mitbewegt werden muss. Außerdem hat die bekannte Technologie den Nachteil, dass bei einer unbegrenzten Verschwenkung um eine Achse (Nx360°) ein komplexer und wartungsintensiver Schleifring benötigt wird, um Anlagenteile oberhalb des Azimut-Antriebs beispielsweise elektrisch und elektrotechnisch sowie datentechnisch und auch mit Gasen und Flüssigkeiten versorgen zu können.

Zudem sind aus dem Bereich der Photovoltaik-Anlagen und der Sonnenwärme-Kraftwerke Vorrichtungen bekannt, um Kollektoren und Spiegel der Sonne oder dem Sonnenstand nachzuführen. Diese Vorrichtungen verfügen in der Regel über zwei orthogonale Gelenke, welche sich am oberen Ende eines Pylonen oder einer ähnlichen Unterkonstruktion befinden. Insbesondere durch Windlast wirkt am Fuß des Pylonen ein erhebliches Drehmoment, weshalb eine robuste Gründung oder Basis, meistens in Form eines massiven Beton-Quaders erforderlich ist. Die Erstellung und der Rückbau derartiger Gründungen oder Basen verursachen erheblichen Aufwand und erhebliche Kosten.

Weiter ist aus der CN 211 315 592 U eine Hexapodvorrichtung bekannt, die mittels elektromagnetischer Teleskopaktuatoren Vibrationen und Bewegungen, die auf eine Plattform einwirken, ausgleicht.

Aus der WO 2017/108997 A1 ist ein zusammenfaltbares Podest bekannt, welches durch eine Drehbewegung von einem zusammengefalteten in einen aufgefalteten Zustand überführbar ist, wobei die Stützmechanik als Gliedergetriebe ausgeführt ist.

Aus der CN 202 100 903 U ist eine Parallelkinematik bekannt, wobei diese Seilzüge und einen Stab umfasst.

Ausgehend von diesem Stand der Technik hat sich die vorliegende Erfindung die Aufgabe gestellt, eine Neigevorrichtung zum Schwenken von Gegenständen um zwei unabhängige Achsen und eine Verwendung der Neigevorrichtung vorzusehen, die die Nachteile im Stand der Technik überwindet und insbesondere ein effizientes, insbesondere energieeffizientes Schwenken von Gegenständen, insbesondere energieloses Aufrechterhalten der eingestellten Schwenkung und Neigung von Gegenständen, welche insbesondere über die Koppel kollisionsfrei hinausragen können, besonders bevorzugt ohne nennenswerte Drehmomente in oder an der Basis der Neigevorrichtung zu ermöglichen.

Gelöst wird diese Aufgabe mit einer Neigevorrichtung mit den Merkmalen des Anspruchs 1. Im Hinblick auf die Verwendung wird die Aufgabe durch die Merkmale des unabhängigen Anspruchs 14 gelöst.

Vorteilhafte Ausführungsformen sind Gegenstand der nachfolgenden Beschreibung, Figurenbeschreibung, der Figuren und der Unteransprüche.

Die erfindungsgemäße Neigevorrichtung zum Schwenken von Gegenständen um zwei unabhängige Achsen umfasst eine Koppel und eine Basis, wobei die Koppel und die Basis über drei Schwingen miteinander verbunden sind und wobei die Anbindung der Basis und der Koppel an die Schwingen über Gelenke erfolgt, wobei die Gelenke zur Anbindung an die Basis und die Gelenke zur Anbindung an die Koppel jeweils so angeordnet sind, dass sie in einer Koppelebene und einer Basisebene ein gleichseitiges Dreieck aufspannen.

Die Erfindung hat erkannt, dass eine derartige Anordnung von Basis, Koppel und Schwingen ein Verschwenken von Gegenständen, die an oder auf der Koppel gelagert und/oder befestigt sind, um zwei unabhängige Achsen erlaubt, wobei keine oder nur minimale Drehmomente auf die Basis übertragen werden oder an der Basis anliegen und darüber hinaus in einem Großteil der Positionen der Koppel gegenüber der Basis eine stabile Position erreicht wird, in der zur Aufrechterhaltung der Position keine Energie aufgewendet oder Leistung in das System eingespeist werden muss, um die Stellung oder Position der Koppel, und folglich die des verschwenkten Gegenstandes, gegenüber der Basis zu halten. Dies ermöglicht in besonders vorteilhafter Weise die Verwendung eines sehr energieeffizienten und energiesparenden Antriebskonzeptes, auf das im Folgenden noch genauer eingegangen werden wird.

Mit anderen Worten ausgedrückt bedeutet dies, dass die Erfindung erkannt hat, dass sich Gegenstände auf der Koppel leicht und effektiv um zwei unabhängige Achsen verschwenken lassen, und nach der Verschwenkung auch besonders energieeffizient in einem Endzustand oder zeitweisen Endzustand halten lassen, wenn die Neigevorrichtung die erfindungsgemäße Ausbildung aufweist. Dabei ist keine oder kaum eine Restriktion im Hinblick auf die Form oder das Volumen des zu schwenkenden Gegenstandes gegeben.

Gemäß einer ersten, besonders vorteilhaften Ausgestaltung der Neigevorrichtung kann vorgesehen sein, dass die gleichseitigen Dreiecke einen Umkreis mit identischem Radius aufweisen. Alternativ kann auch vorgesehen sein, dass die Radien der Umkreise leicht unterschiedlich ausfallen. Gleiche Radien führen zu einem optimalen Verhalten der Neigevorrichtung. Aber auch bei leicht unterschiedlichen Radien kann noch für große Winkelbereiche und unterschiedliche zu schwenkende Gegenstände ein sehr gutes Verhalten realisiert werden.

In einer erfindungsgemäßen Ausgestaltung ist vorgesehen, dass der Abstand von über eine Schwinge miteinander verbundenen Gelenken das 2,3-fache bis 2,7-fache, bevorzugt das Zweieinhalbfache, des Radius eines Umkreises der gleichseitigen Dreiecke beträgt, wenn der Schwerpunkt des zu schwenkenden Gegenstands im Wesentlichen in der Koppelebene liegt. Der Abstand der Gelenke soll klassisch als kürzeste Verbindung zwischen den Gelenkpunkten oder Mittel- oder Schwerpunkten der Gelenke verstanden werden. Wie im Nachfolgenden noch detaillierter beschrieben werden wird, bedeutet dies aber nicht zwangsläufig, dass auch die Schwingen, die die jeweiligen Gelenke miteinander verbinden, auf dieser Verbindungsgeraden oder entlang dieser Verbindungsgeraden verlaufen. Für die Schwingen können auch Längen vorgesehen sein, die größer sind als der Abstand der Gelenke, wodurch dann eine nicht gerade oder nicht lineare Form der Schwingen folgt.

Der Abstand der Gelenke soll für alle drei Schwingen identisch sein und gemäß der vorliegenden Ausführungsform das 2,3-fache bis 2,7-fache, bevorzugt das Zweieinhalbfache, des Radius des Umkreises betragen.

Die Erfindung hat erkannt, dass bei dem besonders bevorzugten Verhältnis zwischen Gelenkabstand und Umkreisradius eine Situation eintritt, bei der für einen besonders großen Teil der mit der Neigevorrichtung einstellbaren oder anfahrbaren Positionen und/oder Ausrichtungen der Koppel gegenüber der Basis nur eine minimale Höhenänderung eintritt oder verursacht wird.

Dies ist besonders vorteilhaft, da dadurch entsprechend viele stabile Endpositionen und/oder stabile Endlagen erreicht werden können, in denen das System oder die Neigevorrichtung samt dem auf der Koppel gelagerten Gegenstand nach Erreichen der Endposition ohne weiteren Energieeintrag oder ohne weitere Kraftbeaufschlagung verbleiben kann und verbleiben wird.

Im Rahmen der vorliegenden Beschreibung soll als Position oder Ausrichtung der Koppel eine Kombination aus zwei Schwenkwinkeln verstanden werden, die ein Verschwenken der Koppel gegenüber der Basis um jeweils eine der unabhängigen Achsen darstellt.

Besonders bevorzugt kann vorgesehen sein, dass die erste Achse eine Neigung der Koppel gegenüber der Basis um einen Winkel von 0° bis +90° erlaubt oder ermöglicht. Die zweite Achse kann ein Verschwenken der Koppel um einen Schwenkwinkel, bevorzugt von 0° bis 360°, besonders bevorzugt von 0° bis n-mal 360° und damit endlos oder anschlagslos erreichen oder bewerkstelligen. Es sei an dieser Stelle jedoch bereits angemerkt, dass für einen überwiegenden Anteil der technischen Anwendungen der Neigevorrichtung deutlich kleinere Winkelbereiche, insbesondere für den Neigungswinkel, notwendig oder erforderlich sind.

Gemäß der vorliegenden Ausführungsform kann besonders vorteilhaft eine Neigung von bis zu 40° realisiert werden, ohne dass für irgendeinen Schwenkwinkel eine wesentliche oder merkliche Höhenänderung eintritt und damit zusätzliche Kraft oder Energie bereitgestellt werden muss, um eine entsprechende Endposition oder Endausrichtung der Koppel zu fixieren oder zu stabilisieren. Weiterhin vorteilhaft, kann abhängig von dem Schwenkwinkel sogar eine Neigung von bis 90° erreicht werden, ohne dass eine wesentliche Höhenverstellung der Koppel bzw. des Koppelschwerpunktes eintritt.

In einer weiteren erfindungsgemäßen Ausgestaltung ist zudem vorgesehen, dass der Abstand von über eine Schwinge miteinander verbundenen Gelenken das 2,05-fache bis 2,3-fache, bevorzugt das $\sqrt{5}$-fache, des Radius eines Umkreises der gleichseitigen Dreiecke beträgt, wenn der Schwerpunkt des zu schwenkenden Gegenstands oberhalb der Koppelebene liegt.

Für flache Gegenstände, wie beispielsweise Photovoltaikmodule, kann die Neigevorrichtung so konstruiert oder umgesetzt werden, dass im Wesentlichen der Schwerpunkt des zu schwenkenden Gegenstandes, beispielsweise der Schwerpunkt des Photovoltaikmoduls, in oder nur unwesentlich oberhalb der Koppelebene angeordnet ist. Für andere mit der Neigevorrichtung zu schwenkende Gegenstände, beispielsweise Simulationsvorrichtungen und/oder Fahrgeschäfte, die eine wesentlichere Höhenerstreckung aufweisen, kann es schwierig bis sehr unpraktisch sein die Neigevorrichtung so zu konstruieren, dass der Schwerpunkt insgesamt in oder nur geringfügig oberhalb der Koppelebene zu liegen kommt.

In diesen Fällen, in denen nämlich eine Lokalisierung des Schwerpunkts der zu schwenkenden Gegenstände bei einer rationalen oder einfachen Konstruktion im Wesentlichen oberhalb der Koppelebene zu liegen kommt, bietet sich das Verhältnis zwischen Abstand der Gelenke zum Radius des Umkreises der gleichseitigen Dreiecke von $\sqrt{5}$ besonders an, da dann ebenfalls für bis zu 40° Neigungswinkel unabhängig von einem Schwenkwinkel eine Verschwenkung des Gegenstandes in eine stabile Endlage möglich ist, wobei für gewisse Schwenkwinkel auch darüber hinaus, beispielsweise bis 70° oder sogar bis 90° Neigung ein Verschwenken ohne merkliche oder wesentliche Höhenänderung des Schwerpunkts der Koppel oder des Systems aus Koppel und zu schwenkendem Gegenstand ermöglicht wird.

In den vorangehend beschriebenen Ausführungsformen sollen die Verhältnisse auf den Radius des Umkreises der Basis bezogen sein, falls die Radien der Umkreise der gleichseitigen Dreiecke der Basis und der Koppel nicht identisch sind.

In einer besonders vorteilhaften Ausgestaltung kann zudem weiter vorgesehen sein, dass die Gelenke der Basis und/oder die Koppel eine Torsionsfederung umfassen. Die Torsionsfederung ist auf die Masse der jeweiligen Schwinge abgestimmt und hält deren Schwerpunkt auf der mittleren Höhe zwischen den verbundenen Gelenken. Folglich hält sich der gemeinschaftliche Schwerpunkt aller drei Schwingen auf halber Höhe des Schwerpunkts der Koppel. Zudem reduziert die Lagerung der Schwingen mittels Torsionsfederung deren ungewünschten oder ungewollten Kontakt mit der Basis, mit der Koppel und untereinander.

In einer weiteren, besonders vorteilhaften Ausgestaltung der Neigevorrichtung kann eine Torsionsfederung einer Schwinge eine Torsionsfeder in oder an einem Gelenk der Basis und in oder an einem Gelenk der Koppel umfassen und so auf beide Gelenke aufgeteilt sein. Die Torsionsfederung ermöglicht einen Schwerpunkt der Schwinge auf halber Höhe zwischen den Gelenken zu halten.

Gemäß einer ebenfalls besonders bevorzugten Ausführungsform der Neigevorrichtung kann zudem vorgesehen sein, dass die Schwingen eine Krümmung und eine größere Länge aufweisen, als der Abstand von über eine Schwinge miteinander verbundenen Gelenken. Wie vorangehend bereits angedeutet können Schwingen, die die Gelenke nicht gradlinig entlang der kürzesten Verbindung oder entlang des Abstandes miteinander verbinden besonders vorteilhaft sein, um die Bewegungsfreiheit der Neigevorrichtung, insbesondere die Winkelbereiche der zwei unabhängigen Achsen zu vergrößern oder zumindest nicht einzuschränken, was der Fall sein kann oder sein könnte, wenn es zu einer Kollision der Schwingen in einem gewissen Winkelbereich der Achsen kommt oder käme. Dementsprechend können einfach gekrümmte Schwingen zum Einsatz kommen, die die Kollision der Schwingen untereinander vermeiden und trotzdem nach Möglichkeit eine Neigung von bis zu 90° und ein Schwenken um n-mal 360° ermöglichen.

Alternativ kann auch vorgesehen sein, dass die Schwingen als durch einen Ring unterbrochene Stäbe ausgebildet sind, wobei bevorzugt die Ringe der verschiedenen Schwingen unterschiedliche Größen, insbesondere unterschiedliche Radien aufweisen. Auch diese Ausführungsform dient im Wesentlichen zur Kollisionsvermeidung der Schwingen und damit zur Vergrößerung der Bewegungsfreiheit oder zur Beibehaltung der Bewegungsfreiheit der Neigevorrichtung, insbesondere im Hinblick der erreichbaren Position und/oder Ausrichtungen der Koppel gegenüber der Basis. Der Schwerpunkt dieser Schwingen liegt mittig zwischen den verbundenen Gelenken, so dass die oben beschriebene Torsionsfederung nicht erforderlich ist.

Eine weitere besonders vorteilhafte Ausgestaltung der Schwingen kann vorsehen, dass die Schwingen als Ringe ausgebildet sind, die einen engen und einen weiten Bogen umfassen, wobei die Gelenke an den Übergängen der Bögen angeordnet sind. Auch diese gekrümmte Form der Schwingen ermöglicht die oben vorteilhaft beschriebenen Verhältnisse zwischen dem Abstand der Gelenke und größtmöglicher Winkelbereiche für Neigung und Verschwenkung der Koppel gegenüber der Basis, ohne dass es zu einer Kollision der Schwingen kommt.

Weiterhin kann vorteilhaft vorgesehen sein, dass die Neigevorrichtung zwei unabhängige, bevorzugt identische, Antriebe umfasst, wobei ein erster Antrieb eine Bewegung der Koppel bezüglich einer ersten unabhängigen Achse und der zweite Antrieb eine Bewegung der Koppel bezüglich einer zweiten unabhängigen Achse bewirkt. Besonders bevorzugt verursacht ein erster Antrieb die Neigung der Koppel um einen Neigungswinkel und der zweite Antrieb verursacht das Verschwenken der Koppel um einen Schwenkwinkel. Durch die unabhängigen Antriebe kann sichergestellt werden, dass eine einfache und zuverlässige Steuerung der Koppel im Hinblick auf die Bewegung bezüglich der zwei unabhängigen Achsen erreicht wird. Durch die vorteilhafte Realisierung über identische Antriebe kann weiterhin die Planung und Konstruktion der Neigevorrichtung vereinfacht werden.

In diesem Zusammenhang soll klargestellt werden, dass zwei unabhängige Antriebe nicht zwangsläufig gleichbedeutend mit zwei unabhängigen und separat ausgeführten Antriebssträngen oder Übertragungswegen gleichzusetzen ist oder verstanden werden soll. Vielmehr kann in einer besonders vorteilhaften Ausführungsform der Erfindung vorgesehen sein, dass die zwei unabhängigen Antriebe ihre Antriebsenergie an einen gemeinsamen Antriebsstrang, insbesondere eine Getriebeanordnung übertragen oder in diese einkoppeln, die dann sowohl die Bewegung der Koppel im Hinblick auf die erste unabhängige Achse als auch die Bewegung der Koppel gegenüber der Basis bezüglich der zweiten unabhängigen Achse bewerkstelligt.

Gemäß einer weiteren vorteilhaften Ausführungsform kann vorgesehen sein, dass die Antriebe als selbsthemmende Antriebe ausgebildet sind. Besonders bevorzugt kann zusätzlich oder alternativ vorgesehen sein, dass ein Antriebsstrang zur Übertragung der Antriebsenergie vom Antrieb auf die Koppel selbsthemmend ausgebildet ist. Die Ausführung der Antriebe und/oder des Antriebsstrangs oder der Antriebsstränge haben den Vorteil, dass diese, in Verbindung mit nicht vermeidbarer Reibung dafür sorgen, dass die Koppel in einem entsprechend großen Winkelbereich der ersten und zweiten Achse nach Einnehmen einer gewissen Position und/oder Ausrichtung in dieser verbleibt oder verharrt, ohne dass zusätzliche Energie oder zusätzliche Kraft aufgewendet werden muss. Damit kann der Winkelbereich oder die Winkelbereiche, in denen die Neigevorrichtung besonders energieeffizient und besonders praktisch betrieben werden kann, deutlich vergrößert werden.

Weiterhin kann besonders bevorzugt eine, die Mittelpunkte von Koppel und Basis gelenkig verbindende Torsionssperre vorgesehen sein, die das Verdrehen der Koppel gegenüber der Basis verhindert. Die Torsionssperre verhindert ungewollte Bewegungen der Koppel gegenüber der Basis und beschränkt die möglichen Bewegungen auf die gewollte Bewegung um die zwei unabhängigen Achsen, insbesondere auf ein Verschwenken des Schwerpunkts der Koppel und auf ein Neigen des Schwerpunkts der Koppel. Bei einer Anordnung der Torsionssperre zwischen den Umkreismittelpunkten der Basis und der Koppel kann zudem erreicht werden, dass keine Kollision oder Kollisionsgefahr mit den Schwingen besteht. Mit anderen Worten ausgedrückt bedeutet dies, dass bei einer entsprechend durch die Umkreismittelpunkte geführten Torsionssperre durch die vorangehend beschriebenen Ausführungsmöglichkeiten der Schwingen ein entsprechend großer Bereich an Neige- und Schwenkwinkeln beibehalten werden kann, ohne dass es zwischen Torsionssperre und Schwingen zu einer Kollision kommt.

Gemäß einer weiteren, besonders vorteilhaften Ausgestaltung kann zudem vorgesehen sein, dass die Torsionssperre gleichzeitig einen Teil eines Antriebsstrangs der Neigevorrichtung darstellt, mit der Antriebsenergie des ersten und/oder zweiten Antriebs auf die Koppel übertragen wird.

Gemäß einer weiteren ebenfalls besonders wünschenswerten Ausgestaltung der Neigevorrichtung kann vorgesehen sein, dass die Koppel Aufnahme- und/oder Befestigungsvorrichtungen für wechselbare und/oder bewegliche Trimmgewichte aufweist. Die Form und die Massenverteilung des zu schwenkenden Gegenstandes aber auch die sonstigen Massen, beispielsweise die Massen der Schwingen, der Torsionssperre und anderer Vorrichtungsteile können dafür sorgen, dass der Schwerpunkt der Koppel oder der Schwerpunkt aus Koppel und darauf angeordnetem, zu schwenkendem Gegenstand weder im noch oberhalb des Umkreismittelpunktes der Gelenke der Koppel angeordnet ist. In diesem Fall kann durch die vorliegende Ausführungsform, in der Aufnahme- und/oder Befestigungsvorrichtungen für wechselbare und/oder bewegliche Trimmgewichte als Teil der Koppel vorgesehen werden, durch das Entfernen, Hinzufügen und/oder Bewegen von Trimmgewichten die Veränderung des Schwerpunkts gegenüber einer Senkrechten auf der Koppelebene durch den Umkreismittelpunkt der Gelenke der Koppelebene erreicht werden. Somit kann die Neigevorrichtung besonders einfach und effektiv austariert oder ausbalanciert werden.

Die eingangs genannte Aufgabe wird auch durch die Verwendung einer Neigevorrichtung nach einer der vorangehenden Ausführungsformen gelöst, die zum Verschwenken von nahe an der Koppel angeordneten Objekten, bevorzugt Photovoltaikmodulen, Solarkollektoren, Spiegeln oder Flachantennen, oder als Ersatz eines Hexapods (Stewart Platform), bevorzugt für Simulationsvorrichtungen und/oder Fahrgeschäfte oder als Unterbau für ein Sitzmöbel, bevorzugt Stuhl oder Hocker, bei der die Sitzfläche in oder auf der Koppelebene angeordnet ist, gelöst.

Grundsätzlich sind noch eine Vielzahl weiterer Verwendungen möglich. Eine Limitierung des Einsatzes resultiert weniger aus dem zu schwenkenden Objekt, als vielmehr aus Fertigungsverfahren und Werkstoffparametern. Die Verwendung der erfindungsgemäßen Neigevorrichtung zur Ausrichtung eines Spiegelfeldes in einem Scheinwerfer ist genauso denkbar, wie das Schwenken eines fußballfeldgroßen Radioteleskops.

All diese Anwendungen oder Verwendungen der Neigevorrichtung sind besonders vorteilhaft, da dadurch eine besonders effektive und effiziente Neigung und Verschwenkung der Koppel gegenüber der Basis in weiten Bereichen ermöglicht werden kann, ohne dass dadurch in einer jeweiligen Endlage oder Endposition eine merkliche Höhenveränderung erfolgt und/oder ohne dass in der Endposition ein notwendiger Energieeintrag zur Beibehaltung der Position benötigt wird und/oder ohne dass an der Basis merkliche Drehmomente angreifen oder abgeleitet werden müssen.

Nachfolgend wird die Erfindung anhand von Ausführungsbeispielen zeigenden, rein schematischen Beispieldarstellungen erläutert werden. Darin zeigen:

Fig. 1:   eine schematische Darstellung des Grundprinzips der erfindungsgemäßen Neigevorrichtung;

Fig. 2:   eine schematische Darstellung einer ersten Ausführungsform der erfindungsgemäßen Neigevorrichtung;

Fig. 3:   eine zweidimensionale Darstellung des in der Fig. 2 wiedergegebenen Positions- und Höhenverlaufs des Schwerpunktes der Koppel;

Fig. 4:   eine schematische Darstellung einer erfindungsgemäßen Neigevorrichtung gemäß einer zweiten Ausführungsform;

Fig. 5:   eine zweidimensionale Darstellung des in der Fig. 4 wiedergegebenen Positions- und Höhenverlaufs des Schwerpunktes des zu schwenkenden Gegenstandes;

Fig. 6:   eine beispielhafte Ausgestaltung der erfindungsgemäßen Neigevorrichtung gemäß einer dritten Ausführungsform;

Fig. 7: eine Seitenansicht der Ausführungsform der Fig. 6;

Fig. 8: eine Seitenansicht einer zweiten Ausführungsform mit einer beispielhaften Ausgestaltung der Schwingen als Stab-Ring-Schwingen;

Fig. 9: eine Seitenansicht einer dritten Ausführungsform mit einer beispielhaften Ausgestaltung der Schwingen, die einen engen und einen weiten Bogen umfassen.

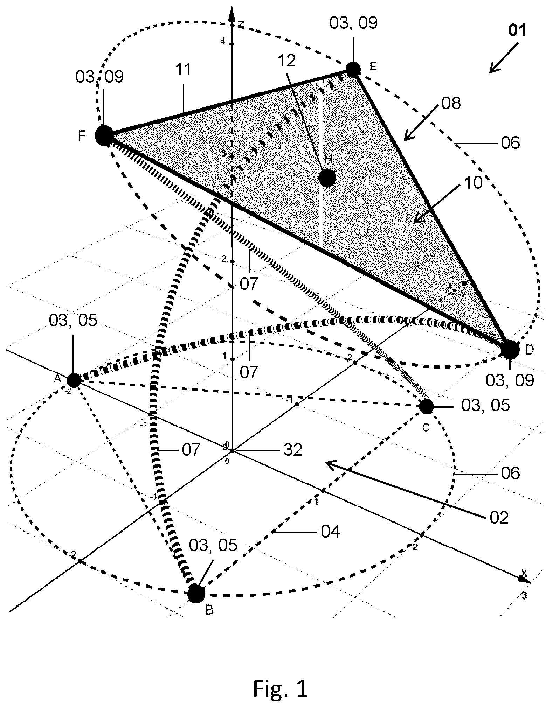

Fig. 1 zeigt eine schematische Darstellung der erfindungsgemäßen Neigevorrichtung 01. Zur besseren Veranschaulichung ist die Neigevorrichtung 01 in einer perspektivischen Darstellung in einem dreidimensionalen kartesischen Koordinatensystem dargestellt. Als Neigung oder Neigungswinkel soll eine Neigung gegenüber der z-Achse des Koordinatensystems verstanden werden. Ein Schwenken soll als eine Rotation in der x-y-Ebene des Koordinatensystems verstanden werden. Dementsprechend wird der Neigungswinkel $\theta$ und der Schwenkwinkel $\varphi$ definiert.

Die Neigevorrichtung 01 umfasst eine Basis 02, mit einer Basisebene in der XY Ebene des Koordinatensystems. Die Basis weist an drei Eckpunkten 03 eines gleichseitigen Dreiecks 04 nicht im Detail dargestellte Basisgelenke 05 auf. Die Eckpunkte 03 und die Gelenke 05 sind im Koordinatensystem der Fig. 1 so angeordnet, dass der Umkreis 06 um das gleichseitige Dreieck 04 durch den Ursprung des Koordinatensystems verläuft. Von den drei Eckpunkten 03 und den dort angeordneten Gelenken 05 verlaufen drei Schwingen 07 ausgehend von der Basis 02 zu einer Koppel 08. Die Koppel 08 umfasst drei Koppelgelenke 09, die mit den Schwingen 07 verbunden sind. Die Koppelgelenke oder deren Mittel- oder Schwerpunkte bilden eine Koppelebene 10. Die Gelenke 09 der Koppel 08 bilden ebenfalls die Eckpunkte 03 eines gleichseitigen Dreiecks 11. Der Umkreismittelpunkt verläuft in der Darstellung der Fig. 1, in der die Koppel 08 tatsächlich auf das gleichseitige Dreieck 11 beschränkt ist, durch den Schwerpunkt 12 der Koppel 08. Wie in der Fig. 1 bereits angedeutet, können die Schwingen 07 gebogen oder gekrümmt ausgeführt sein.

Der Abstand zwischen den jeweils über eine Schwinge 07 miteinander verbundenen Gelenken 05, 09 weist einen gleichbleibenden, gradlinigen, kürzesten Abstand I abseits oder außerhalb der Schwingen 07 zueinander auf, der nachfolgend auch als Gelenkabstand I bezeichnet werden wird. Wie nachfolgend noch im Detail dargestellt werden wird, kann je nach Anwendungszweck oder je nach zu schwenkendem Gegenstand, der in der Darstellung der Fig. 1 im Wesentlichen aus der Koppel 08 selbst besteht, ein unterschiedliches Verhältnis von Gelenkabstand I zu Umkreisradius r vorgesehen werden. Bezüglich des Umkreisradius r sollen die gleichseitigen Dreiecke 04 und 11 bevorzugt aber nicht zwangsläufig so ausgestaltet sein, dass ein identischer Umkreis 06 oder ein identischer Umkreisradius r erreicht wird. Dies bedeutet mit anderen Worten ausgedrückt, dass die Seitenlänge der gleichseitigen Dreiecke 04, 11 identisch ausfällt.

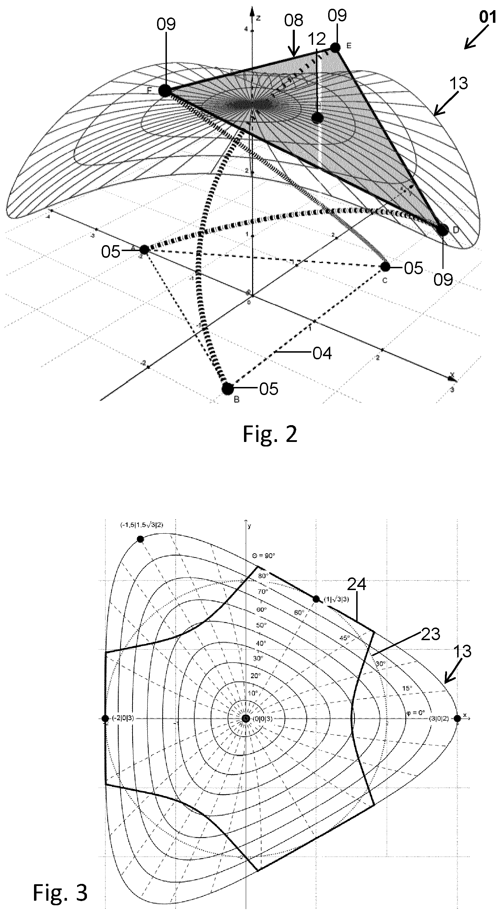

Die Fig. 2 zeigt eine abgewandelte Darstellung der Fig. 1. Die wesentliche Ergänzung der Fig. 2 gegenüber der Fig. 1 ist eine Darstellung der gekrümmten Fläche 13, in der sich der Schwerpunkt 12 der Koppel 08 bewegt, wenn die Koppel 08 um einen Neigungswinkel $\theta$ zwischen 0° und 90° geneigt oder um einen beliebigen Schwenkwinkel $\varphi$ verschwenkt wird. Die in der Fig. 2 dargestellten durchgezogenen Linien der gekrümmten Fläche 13, auf der sich der Schwerpunkt 12 der Koppel 08 bewegt, stellen jeweils Bereiche mit gleichem Neigungswinkel $\theta$ (geschlossene Konturen) bzw. Linien mit identischem Schwenkwinkel $\varphi$ (strahlförmige Linien) dar. Es ist bereits zu erkennen, dass es lediglich in drei Randbereichen der gekrümmten Fläche 13 zu einer wesentlichen oder merklichen Höhenverlagerung des Schwerpunkts 12 der Koppel 08 kommt. Dies tritt jedoch nur bei großen Neigungswinkeln $\theta$ auf, was anhand der geschlossenen Konturen der gekrümmten Fläche 13 ersichtlich ist.

Daraus ist bereits erkennbar, dass für einen Neigebereich und einen Schwenkbereich, der für fast alle technischen Anwendungen wesentlich oder erheblich ist, bei der Ausführungsform der Fig. 2, bei der das Verhältnis des Abstands I der Gelenke 05, 09, die über eine Schwinge 07 miteinander verbunden sind das 2,5-fache des Umkreisradius r beträgt, eine Neigung und Verschwenkung der Koppel 08 möglich ist, bei der die Höhe des Schwerpunkts 12 der Koppel 08 annähernd unverändert bleibt. Zur besseren Verdeutlichung dieses Umstandes wird auf die nachfolgenden Fig. 3 und die nachfolgend wiedergegebene Tabelle 1 verwiesen, in der anhand der Werte des Umkreisradius r = 2 und des Abstands der Gelenke I = 5 die Höhenveränderung des Schwerpunkts 12 der Koppel 08 abhängig vom Neigungswinkel $\theta$ und abhängig vom Schwenkwinkel $\varphi$ wiedergegeben und veranschaulicht wird.

**Tabelle 1: Höhe des Schwerpunkts 12 der Koppel 08 für l ÷ r = 2,5**

| Höhe *h von 12* für *r* = 2 und l = 5 | | Neigung *Θ* | | | | | | | | | |
|---|---|---|---|---|---|---|---|---|---|---|---|
| | | 0° | 10° | 20° | 30° | 40° | 50° | 60° | 70° | 80° | 90° |
| Schwenkwinkel φ | 0° | 3,0 | 3,0 | 3,0 | 3,0 | 2,9 | 2,8 | 2,7 | 2,5 | 2,3 | 2,0 |
| | 15° | 3,0 | 3,0 | 3,0 | 3,0 | 2,9 | 2,9 | 2,8 | 2,6 | 2,4 | 2,2 |
| | 30° | 3,0 | 3,0 | 3,0 | 3,0 | 3,0 | 2,9 | 2,9 | 2,8 | 2,7 | 2,5 |

| Höhe *h von 12* für *r* = 2 und l = 5 | Neigung *Θ* | | | | | | | | | |
|---|---|---|---|---|---|---|---|---|---|---|
| | 0° | 10° | 20° | 30° | 40° | 50° | 60° | 70° | 80° | 90° |
| 45° | 3,0 | 3,0 | 3,0 | 3,0 | 3,0 | 3,0 | 3,0 | 2,9 | 2,9 | 2,9 |
| 60° | 3,0 | 3,0 | 3,0 | 3,0 | 3,0 | 3,0 | 3,0 | 3,0 | 3,0 | 3,0 |

In der Fig. 3 ist eine Projektion der gekrümmten Fläche 13 in ein zweidimensionales Koordinatensystem vorgenommen worden, wobei die Höhe des Schwerpunkts 12 der Koppel 08 durch entsprechende Höhenlinien und Höhenkonturen verdeutlicht wird. Durchgezogene Linien betreffen darin Punkte mit gleicher Neigung. Gestrichelt dargestellte Linien betreffen Bereiche mit gleichem Schwenkwinkel. Die strichpunktiert dargestellten Linien betreffen die eigentlichen Höhenlinien oder Grenzwerte der Höhe des Schwerpunkts 12 der Koppel. Die entsprechenden Höhenwerte sind beispielhaft auch in der Tabelle 1 wiedergegeben. Da die Aufenthaltsflächen des Schwerpunkts 12 der Koppel 08 trisymmetrisch ausfallen, wird lediglich der Schwenkwinkel φ von 0° bis 60° betrachtet, da sich die Werte bei entsprechenden weiterführenden Schwenkwinkeln φ entsprechend der Symmetrie wiederholen.

Anhand des gewählten Zahlenbeispiels lässt sich leicht erkennen, dass sich nur für Neigungswinkel θ oberhalb von 40° für gewisse Bereiche des Schwenkwinkels φ überhaupt eine merkliche Höhenänderung des Schwerpunkts 12 der Koppel 08 einstellt. Eine Neigung von 40° ist aber für einen ganz überwiegenden Teil von technischen Anwendungen der erfindungsgemäßen Neigevorrichtung eine vollkommen ausreichende Neigung. Für Gegenstände, deren Schwerpunkt 12 in der Koppelebene oder geringfügig unterhalb oder oberhalb der Koppelebene liegen und deren Schwerpunkte grundsätzlich oder durch entsprechende Trimmgewichte in oder geringfügig über den Schwerpunkt 12 der Koppel 08 verlegt oder bewegt werden können, also insbesondere flache Gegenstände, kann mit dem gewählten Verhältnis von 2,5 zwischen Umkreisradius r zu Gelenkabstand l eine besonders vorteilhafte, energieeffiziente und robuste Neigung und Verschwenkung innerhalb der horizontalen Fläche 24 in Fig. 3 im Zusammenwirken mit der nicht vermeidbaren inneren Reibung der Neigevorrichtung 01 erreicht werden. Über einen selbsthemmenden Antrieb oder selbsthemmende Antriebe kann der Bereich, in der eine stabile Endposition nach dem Neigen und Verschwenken erreicht wird auf den vollständigen durch die gekrümmte Fläche 13 dargestellten Bereich erweitert werden.

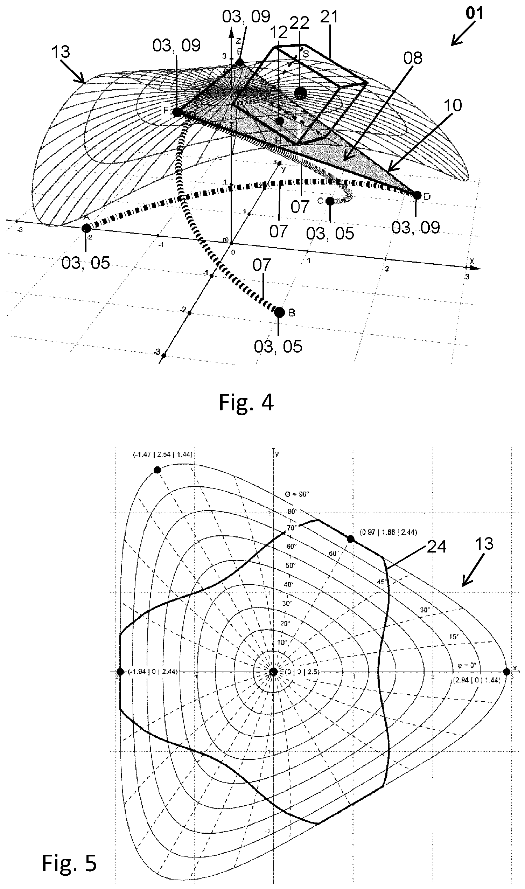

Die Fig. 4 und 5 sowie die nachfolgend wiedergegebene Tabelle 2 zeigen ein abgewandeltes Beispiel der erfindungsgemäßen Neigevorrichtung 01, bei der der Schwerpunkt 22 des zu schwenkenden Gegenstandes 21 nicht innerhalb der Koppelebene 10 angeordnet ist, sondern auf einer Senkrechten durch den Schwerpunkt 12 der Koppelebene 10 oberhalb der Koppelebene 10 zentriert angeordnet ist. Im Beispiel der Fig. 4 ist der zu schwenkende Gegenstand 21 als Würfel ausgebildet. Für dieses Ausführungsbeispiel bietet sich besonders vorteilhaft ein Abstand l der Gelenke 09, 05 zueinander an, bei dem der Abstand l der Gelenke 09, 05 das $\sqrt{5}$-fache des Radius r des Umkreises der gleichseitigen Dreiecke 04, 11 durch die Eckpunkte 3 oder durch die Gelenke 05, 09 beträgt.

Auch in der Fig. 4 ist bereits eine gekrümmte Fläche 13 eingezeichnet, die die Bewegung des Schwerpunkts 22 des zu schwenkenden Gegenstandes 21 auf der Koppel 08 oder oberhalb der Koppelebene 10 verdeutlicht. Geschlossene Konturen entsprechen dabei erneut Positionen mit identischem Neigungswinkel θ. Radial verlaufende Linien oder Strahlen entsprechen Positionen mit identischem Schwenkwinkel φ. Auch in der perspektivischen Ansicht der Fig. 4 ist bereits erkennbar, dass die gekrümmte Fläche 13 in weiten Bereichen des Neigungswinkels θ und in ebenfalls großen Bereichen des Schwenkwinkels φ eine minimale oder vernachlässigbare Höhenänderung erfährt, was sowohl für die Stabilität der Endposition der Koppel 08 und des darauf befindlichen zu schwenkenden Gegenstandes 21 als auch für die energieeffiziente Neigung und Verschwenkung des zu schwenkenden Gegenstandes 21 erheblich ist.

In analoger Darstellungsweise zur Fig. 3 und analog zur vorangehend dargestellten Tabelle 1 wird nachfolgend in der Fig. 5 und der ebenfalls nachfolgend wiedergegebenen Tabelle 2 abermals die Veränderung des Schwerpunkts 22 des zu schwenkenden Gegenstandes 21, insbesondere die Höhenänderung des Schwerpunkts 22 des zu schwenkenden Gegenstandes 21 in Abhängigkeit von Schwenkwinkel φ und Neigungswinkel θ verdeutlicht. Auch hier ist erkennbar, dass für jede Kombination aus Neigewinkel und Schwenkwinkel im Zusammenwirken mit der nicht vermeidbaren inneren Reibung der Neigevorrichtung 01 innerhalb der horizontalen Fläche (24) nur eine äußerst geringe und damit vernachlässigbare Höhenverschiebung oder Höhenverlagerung des Schwerpunkts 22 des zu schwenkenden Gegenstandes 21 eintritt.

Daraus folgt, dass das vorangehend beschriebene Verhältnis von Abstand I der Gelenke 05, 09 zum Radius r des Umkreises 06 von $\sqrt{5}$ besonders gut geeignet ist Gegenstände zu schwenken, deren Schwerpunkt 22 oberhalb der Koppelebene 10 und oberhalb des Schwerpunkts 12 der Koppelebene 10 angeordnet ist. Wie eingangs bereits erwähnt, sind die Schwerpunkte 12 und 22 der Koppelebene 10 bzw. des zu schwenkenden Gegenstandes 21 bezogen auf die Koppelebene 10 übereinander angeordnet bzw. liegen beide auf einer Senkrechten durch die Koppelebene 10. Für Gegenstände, die in Abweichung von dem sehr theoretischen Beispiel der Fig. 4 nicht derart zentral angeordnet werden können, kann mit Trimmgewichten dafür gesorgt werden, dass der Schwerpunkt 22 des zu schwenkenden Gegenstandes 21 so angeordnet ist, wie im Idealfall der Fig. 4 dargestellt. Dies kann durch Trimmgewichte erreicht werden, die an oder auf der Koppel 08 angeordnet sind. Bevorzugt kann die Koppel 08 dazu Aufnahme- und/oder Befestigungsvorrichtungen für wechselbare und/oder bewegliche Trimmgewichte aufweisen.

**Tabelle 2: Höhe des Schwerpunkts 22 des Gegenstandes 21 für I ÷ r = $\sqrt{5}$**

| Höhe von 22 für $r$ = 2 und I = 2$\sqrt{5}$ | | Neigung $\Theta$ | | | | | | | | | |
|---|---|---|---|---|---|---|---|---|---|---|---|
| | | 0° | 10° | 20° | 30° | 40° | 50° | 60° | 70° | 80° | 90° |
| Schwenkwinkel φ | 0° | 2,5 | 2,5 | 2,5 | 2,5 | 2,4 | 2,3 | 2,2 | 2,0 | 1,8 | 1,4 |
| | 15° | 2,5 | 2,5 | 2,5 | 2,5 | 2,4 | 2,4 | 2,3 | 2,1 | 1,9 | 1,6 |
| | 30° | 2,5 | 2,5 | 2,5 | 2,5 | 2,5 | 2,4 | 2,4 | 2,3 | 2,1 | 2,0 |
| | 45° | 2,5 | 2,5 | 2,5 | 2,5 | 2,5 | 2,5 | 2,5 | 2,4 | 2,4 | 2,3 |
| | 60° | 2,5 | 2,5 | 2,5 | 2,5 | 2,5 | 2,5 | 2,5 | 2,5 | 2,5 | 2,4 |

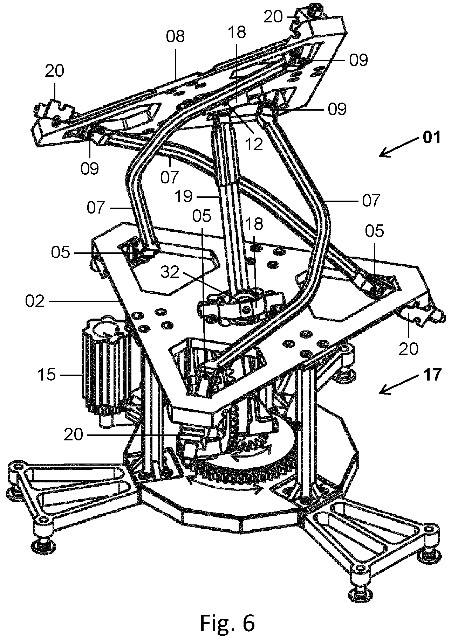

Die Fig. 6 zeigt eine konkretere Realisation der erfindungsgemäßen Neigevorrichtung 01 in einer beispielhaften Ausführungsform samt eines Antriebs zum Neigen und Schwenken der Koppel 08. Dazu umfasst die Neigevorrichtung 01 neben der Basis 02 und der Koppel 08 die drei Schwingen 07, welche die Gelenke 05 und 09 miteinander verbinden. An den Gelenken 05, 09 sind jeweils Torsionsfederungen 20 angeordnet, welche für den Schwerpunkt der Schwingen 07, während des Neigens und Schwenkens auf halber Höhe zwischen den Gelenken 05, 09 halten.

Weiterhin verläuft eine Torsionssperre 19 durch den Schwerpunkt 32 der Basis 02 sowie durch den Schwerpunkt 12 der Koppel 08. Durch die Torsionssperre 19 wird die Koppel 08 drehsteif mit der Basis 02 verbunden. Die Gelenke 18 zur Lagerung der Torsionssperre 19 an oder in der Basis 02 sowie der Koppel 08 sind als kardanische Aufhängungen ausgebildet. Dies ist besonders sinnvoll, wenn es sich bei der Neigevorrichtung 01 um einen angetriebenen Mechanismus oder eine angetriebene Vorrichtung handelt. Alternativ kann ein Doppelwellengelenk mit Schiebehülse nach DIN 808 verwendet werden, dessen beide äußeren Gabeln Teil der Koppel 08 und/oder Teil der Basis 02 sind und deren Gelenke 18 entsprechend an den Schwerpunkten 12, 32 der Basis 02 und der Koppel 08 platziert werden.

Im Beispiel der Fig. 6 sind unterhalb der Basis 02 eine Antriebseinheit 17 sowie Teile eines Antriebsstrangs 16 angeordnet. In dem gezeigten Beispiel ist die Torsionssperre 19 auch zur Übertragung von Antriebsenergie zum Neigen und Verschwenken der Koppel 08 ausgebildet und dient damit nicht nur zur drehsteifen Kopplung zwischen Basis 02 und Koppel 08, sondern auch zum Neigen und Verschwenken der Koppel 08 gegenüber der Basis 02.

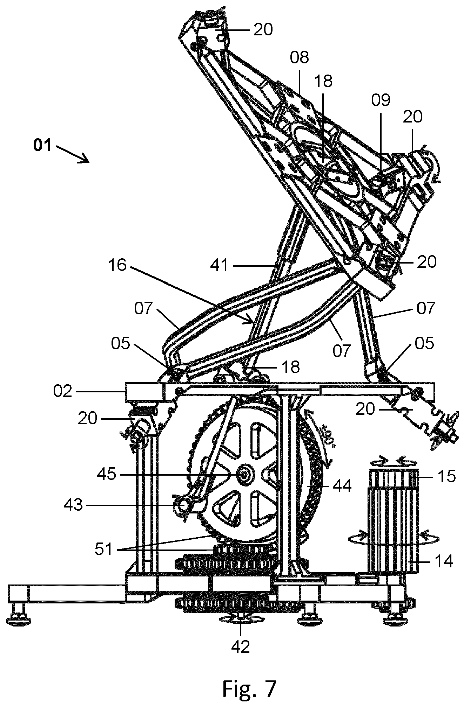

Details der Antriebseinheit 17 und weitere Einzelheiten der Neigevorrichtung 01 werden mit Bezug zur Fig. 7 erläutert.

Die Fig. 7 zeigt eine Seitenansicht der Ausführungsform der Fig. 6. Die Darstellung zeigt ein Modell der erfindungsgemäßen Neigevorrichtung 01 mit zwei manuell betätigbaren Antrieben 15, 14. Bei einer alternativen Ausführungsform in größerem Maßstab könnte selbstverständlich als Antrieb auch ein elektromotorischer oder ein in sonstiger Weise geeigneter Antrieb zum Einsatz kommen. Besonders bevorzugt sind die Antriebe 14, 15 identisch ausgebildet. Der Antriebsstrang 16 ist nach dem Prinzip eines Hoecken-Mechanismus ausgebildet. Der Hoecken-Mechanismus besteht aus einem Pleuel 41, welches über das Drehgelenk 43 mit der Kurbelwelle 44 verbunden ist. Die Achse der vertikalen Welle 42 ist mittig in der Verlängerung des Gelenks 18 angeordnet.

Die Achse des Kurbelwellenlagers 45 steht rechtwinklig auf der Achse der vertikalen Welle 42. Das untere Gelenk 18 ist in der dargestellten Ausführungsform ein Schub-Schwenkgelenk. Das Betätigen der Kurbelwelle 44 bewirkt ausgehend vom untersten Punkt das Neigen und Anheben des Pleuels 41. Das Drehen des Hoecken-Mechanismus um die vertikale Welle 42 lässt den Pleuelkopf rotieren. Der Hoecken-Mechanismus und folglich die Neigevorrichtung 01 befinden sich in einer Grundstellung, wenn sich das Drehgelenk 43 am unteren Totpunkt befindet. Um den dargestellten, beispielhaften Hoecken-Mechanismus als Antriebsstrang 16 auf das vorteilhafte Verhältnis der Seitenlänge der gleichseitigen Dreiecke 04, 11 und/oder deren Umkreisradius r und dem Abstand I der Gelenke 05, 09 anzupassen, sind im Wesentlichen der Kurbelradius der Kurbelwelle 44, der vertikale Abstand zwischen der Mitte des Gelenks 18 und der Achse des Kurbelwellenlagers 45, die Länge des Pleuels 41 zwischen dem Mittelpunkt des oberen Gelenks 18 und der Achse des Drehgelenks 43 sowie die erforderliche horizontale Verschiebung der Mitte des oberen Gelenks 18, welches sich aus der benötigten Neigung gemäß der vorangehenden Abbildungen ableiten lässt, erforderlich.

Durch die entsprechende Anpassung kann erreicht werden, dass der als Antriebsstrang 16 verwendete Hoecken-Mechanismus so ausgelegt wird, dass das obere Ende des Pleuels 41 oder der Pleuelkopf eine gradlinige Bewegung ausführt, während die Kurbel zwischen -90° und +90° bewegt wird. Im Beispiel der Fig. 6 und 7 wird manuell mithilfe der Handkurbel über einen aus Übersichtlichkeitsgründen nicht dargestellten Kettentrieb die Basis des Hoecken-Mechanismus gedreht, wodurch das Kurbelwellenlager 45 um die vertikale Welle 42 rotiert. Dieser Aufbau ermöglicht einen Schwenkwinkel φ von n-mal 360°. Gleichermaßen wird manuell mithilfe der Handkurbel über den nicht dargestellten Kettentrieb die vertikale Welle 42 angetrieben. Dies treibt das Kronenradgetriebe 51 an, welches über die Kurbelwelle 44 das Drehgelenk bewegt. Die Bewegung der Kurbelwelle 44 wird mittels Anschlägen an der Basis des Hoecken-Mechanismus limitiert, sodass sich das Drehgelenk 43 vom unteren Totpunkt aus nur um maximal ±90° bewegen kann. Mit dem Drehgelenk 43 neigt sich das Pleuel 41, welches über das untere Gelenk 18 die Koppel 08 neigt. Die gepunktete Kreislinie 23 in Fig. 3 umfasst den Bereich der mit dem in Fig. 6 und Fig. 7 dargestellten Modell einstellbaren Neigewinkel Θ und Schwenkwinkel φ der Koppel 08.

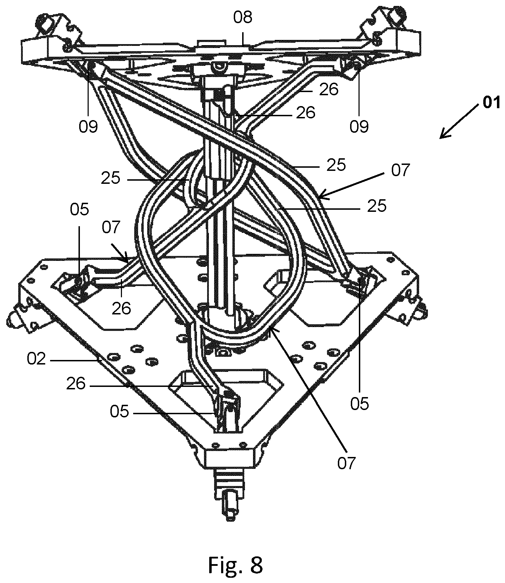

Die Fig. 8 zeigt eine alternative Ausführungsform der Neigevorrichtung 01 aus Fig. 6. Der wesentliche Unterschied zur Ausgestaltung der Fig. 6 besteht in der Ausführung der Schwingen 07, die als Stab-Ring-Schwingen ausgebildet sind. Dies bedeutet im vorliegenden Fall, dass die Schwingen 07 allesamt als durch einen Ring 25 unterbrochene Stäbe 26 ausgebildet sind, wobei die Ringe 25 der Schwingen 07 unterschiedliche Größen, insbesondere Radien, aufweisen. Damit kann effektiv eine Kollision der Schwingen 07 verhindert werden, ohne die Bewegungsmöglichkeit der Koppel einzuschränken. Dabei ist erkennbar, dass für die Schwinge 07 mit dem größten Ring 25 der beidseitige Stab auf einen gemeinsamen Verbindungsbereich mit den Gelenken 05, 09 reduziert ist und somit abgesehen von dem Verbindungsbereich zu den Gelenken 05, 09 auch als reine Ringschwinge verstanden werden könnte.

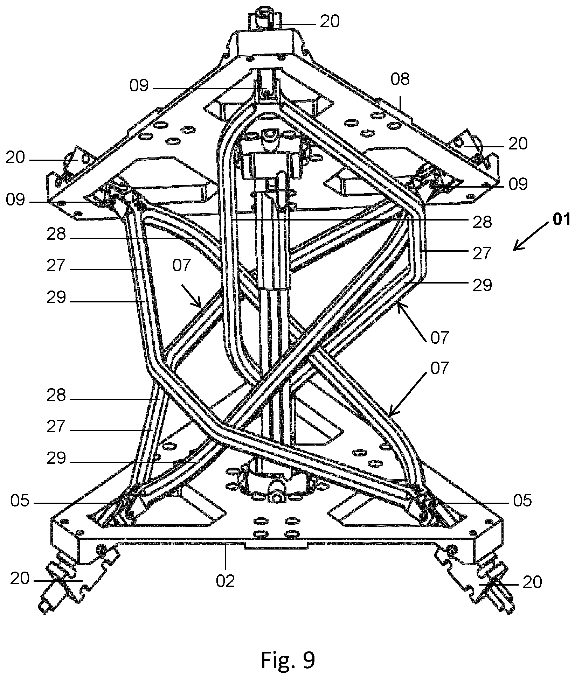

Die Fig. 9 zeigt eine alternative Ausführungsform der Neigevorrichtung 01. Der wesentliche Unterschied zu den Varianten der Fig. 6 und Fig. 8 besteht abermals in der Ausführung der Schwingen 07, die als Ringe 27 ausgebildet sind, die einen engen Bogen 28 und einen weiten Bogen 29 umfassen, wobei die Gelenke 05, 09 an den Übergängen der Bögen 28, 29 angeordnet sind. Wie oben bereits mit Bezug zur Fig. 8 angedeutet, können auch Mischformen von unterschiedlichen Schwingen 07 vorgesehen sein, bei denen beispielsweise nicht lineare Stab-Schwingen mit Stab-Ring-Schwingen und/oder Ring-Schwingen kombiniert werden.

Ein motorisches Antreiben der Basis des Hoecken-Mechanismus und der Kurbelwelle 44 erspart die in dem Modell dargestellten Getriebe.

Bezugszeichen

01   Neigevorrichtung
02   Basis
03   Eckpunkte
04   gleichseitiges Dreieck in der Basis
05   Basisgelenke
06   Umkreis
07   Schwingen
08   Koppel

09 Koppelgelenke
10 Koppelebene
11 gleichseitiges Dreieck in der Koppel
12 Schwerpunkt der Koppel
13 gekrümmte Fläche
14 Antriebe Neigewinkel
15 Antriebe Schwenkwinkel
16 Antriebsstrang
17 Antriebseinheit
18 Gelenke der Torsionssperre
19 Torsionssperre
20 Torsionsfederungen
21 zu schwenkender Gegenstand
22 Schwerpunkt des zu schwenkenden Gegenstandes
23 gepunktete Kreislinie
24 horizontale Fläche (= Teil der gekrümmten Fläche)
25 Ring
26 Stab
27 Ring
28 enger Bogen
29 weiter Bogen
32 Umkreismittelpunkt
41 Pleuel
42 vertikale Welle
43 Drehgelenk
44 Kurbelwelle
45 Kurbelwellenlager
51 Kronenradgetriebe

**Patentansprüche**

1. Neigevorrichtung (01) zum Schwenken von Gegenständen um zwei, unabhängige Achsen mit einer Koppel (08) und einer Basis, (02) wobei die Koppel (08) und die Basis (02) über drei Schwingen (07) miteinander verbunden sind, und wobei die Anbindung der Basis (02) und der Koppel (08) an die Schwingen (07) über Gelenke (05, 09) erfolgt und wobei die Gelenke (05) zur Anbindung an die Basis (02) und die Gelenke (09) zur Anbindung an die Koppel (08) jeweils so angeordnet sind, dass sie in einer Koppelebene (10) und einer Basisebene ein gleichseitiges Dreieck (04, 11) aufspannen,
   **dadurch gekennzeichnet,**
   **dass** der Abstand von über eine Schwinge (07) miteinander verbundenen Gelenken (05, 09) das 2,3-fache bis 2,7-fache, bevorzugt das zweieinhalb-fache, des Radius eines Umkreises (06) der gleichseitigen Dreiecke (04, 11) beträgt, wenn der Schwerpunkt (22) des zu schwenkenden Gegenstandes (21) im Wesentlichen in der Koppelebene (10) liegt oder wobei der Abstand von über eine Schwinge (07) miteinander verbundene Gelenken (05, 09) das 2,05-fache bis 2,3-fache, bevorzugt das √5-fache, des Radius eines Umkreises (06) der gleichseitigen Dreiecke (04, 11) beträgt, wenn der Schwerpunkt (22) des zu schwenkenden Gegenstandes (21) oberhalb der Koppelebene (10) liegt.

2. Neigevorrichtung nach Anspruch 1,
   **dadurch gekennzeichnet,**
   **dass** die gleichseitigen Dreiecke (04, 11) einen Umkreis (06) mit identischem Radius aufweisen.

3. Neigevorrichtung nach einem der Ansprüche 1 oder 2,
   **dadurch gekennzeichnet, dass** die Gelenke (05, 09) der Basis (02) und/oder der Koppel (08) eine Torsionsfederung (20) umfassen.

4. Neigevorrichtung nach einem der Ansprüche 1 bis 3,
   **dadurch gekennzeichnet,**
   **dass** die Schwingen (07) eine Krümmung und eine größere Länge aufweisen als der Abstand von über eine Schwinge (07) miteinander verbundenen Gelenken (05, 09).

**5.** Neigevorrichtung nach einem der Ansprüche 1 bis 4,
**dadurch gekennzeichnet,**
**dass** die Schwingen (07) als durch einen Ring (25) unterbrochene Stäbe (26) ausgebildet sind, wobei bevorzugt die Ringe (25) der Schwingen (07) unterschiedliche Größen, insbesondere Radien, aufweisen.

**6.** Neigevorrichtung nach einem der Ansprüche 1 bis 5,
**dadurch gekennzeichnet,**
**dass** die Schwingen (07) als Ringe (27) ausgebildet sind, die einen engen Bogen (28) und einen weiten Bogen (29) umfassen, wobei die Gelenke (05, 09) an den Übergängen der Bögen (28, 29) angeordnet sind.

**7.** Neigevorrichtung nach einem der Ansprüche 1 bis 6,
**gekennzeichnet durch**
zwei unabhängige, bevorzugt identische, Antriebe (14, 15), wobei ein erster Antrieb (14) die Neigung der Koppel (08) um einen Neigungswinkel θ und der zweite Antrieb (15) das Verschwenken der Koppel (08) um einen Schwenkwinkel φ bewirkt.

**8.** Neigevorrichtung nach Anspruch 7,
**dadurch gekennzeichnet,**
**dass** die Antriebe (14, 15) als selbsthemmende Antriebe (14, 15) ausgebildet sind.

**9.** Neigevorrichtung nach einem der Ansprüche 1 bis 8,
**gekennzeichnet durch**
eine, die Mittelpunkte (12) und (32) von Koppel (08) und Basis (02) gelenkig (18) verbindende Torsionssperre (19), welche das Verdrehen der Koppel (08) gegenüber der Basis (02) verhindert.

**10.** Neigevorrichtung nach Anspruch 9,
**dadurch gekennzeichnet,**
**dass** die Torsionssperre (19) Antriebsenergie beider Antriebe (14, 15) auf die Koppel (08) überträgt.

**11.** Neigevorrichtung nach einem der Ansprüche 1 bis 10,
**dadurch gekennzeichnet,**
**dass** die Koppel (08) Aufnahme- und/oder Befestigungsvorrichtungen für wechselbare und/oder bewegliche Trimmgewichte aufweist.

**12.** Verwendung einer Neigevorrichtung nach einem der Ansprüche 1 bis 11,
zum Verschwenken von nahe an der Koppel (08) angeordneten Objekten, bevorzugt Photovoltaikmodulen, Solarkollektoren, Spiegeln oder Flachantennen, oder als Ersatz eines Hexapods (Stewart Platform), bevorzugt für Simulationsvorrichtungen und/oder Fahrgeschäfte oder als Unterbau für ein Sitzmöbel, bevorzugt Stuhl oder Hocker, bei dem die Sitzfläche auf der Koppelebene (10) angeordnet ist.

**Claims**

**1.** A tilting device (01) configured for pivoting objects about two independent axes and having a couple (08) and a base (02), the couple (08) and the base (02) being connected to each other via three rockers (07), and the base (02) and the couple (08) being connected to the rockers (07) via joints (05, 09) and the joints (05) for being connected to the base (02) and the joints (09) for being connected to the couple (08) each being disposed in such a manner that they span an equilateral triangle (04, 11) in a couple plane (10) and a base plane,
**characterized in that**
the distance of joints (05, 09) connected to each other via a rocker (07) is 2.3 to 2.7 times, preferably 2.5 times, the radius of a circumference (06) of the equilateral triangles (04, 11) when the center of gravity (22) of the object (21) to be pivoted is mostly in the couple plane (10) or the distance of joints (05, 09) connected to each other via a rocker (07) is 2.05 to 2.3 times, preferably $\sqrt{5}$ times, the radius of a circumference (06) of the equilateral triangles (04, 11) when the center of gravity (22) of the object (21) to be pivoted is above the couple plane (10).

**2.** The tilting device according to claim 1,
**characterized in that**
the equilateral triangles (04, 11) have a circumference (06) with an identical radius.

3. The tilting device according to any one of the claims 1 or 2,
   **characterized in that**
   the joints (05, 09) of the base (02) and/or the couple (08) comprise a torsion spring (20).

4. The tilting device according to any one of the claims 1 to 3,
   **characterized in that**
   the rockers (07) have a curvature and a longer length than the distance of joints (05, 09) connected to each other via a rocker (07).

5. The tilting device according to any one of the claims 1 to 4,
   **characterized in that**
   the rockers (07) are formed as rods (26) interrupted by a ring (25), the rings (25) of the rockers (07) preferably having different sizes, in particular radii.

6. The tilting device according to any one of the claims 1 to 5,
   **characterized in that**
   the rockers (07) are designed as rings (27) which comprise a tight arc (28) and a wide arc (29), the joints (05, 09) being disposed at the transitions to the arcs (28, 29).

7. The tilting device according to any one of the claims 1 to 6,
   **characterized by**
   two independent, preferably identical, drive mechanisms (14, 15), a first drive mechanism (14) tilting the couple (08) by an inclination angle $\theta$ and the second drive mechanism (15) pivoting the couple (08) by a pivoting degree $\varphi$.

8. The tilting device according to claim 7,
   **characterized in that**
   the drive mechanisms (14, 15) are designed as self-locking drive mechanisms (14, 15).

9. The tilting device according to any one of the claims 1 to 8,
   **characterized by**
   a torsional lock (19) which articulately joins the centers of gravity (12) and (32) of the couple (08) and the base (02) and prevents the couple (08) from pivoting in relation to the base (02).

10. The tilting device according to claim 9,
    **characterized in that**
    the torsional lock (19) transfers the drive energy of both drive mechanisms (14, 15) to the couple (08).

11. The tilting device according to any one of the claims 1 to 10,
    **characterized in that**
    the couple (08) has receiving and/or fastening devices for exchangeable and/or movable trim weights.

12. A usage of a tilting device according to any one of the claims 1 to 11, for pivoting objects disposed close to the couple (08), the objects preferably being photovoltaic modules, solar panels, mirrors or flat antennas, or as a substitute of a hexapod (Stewart platform), preferably for simulation devices and/or carnival rides or as a substructure for a seat, preferably a chair or stool, whose seat is disposed on the couple plane (10).

**Revendications**

1. Dispositif d'inclinaison (01) configuré pour faire pivoter des objets autour de deux axes indépendants et ayant une bielle (08) et une base (02), la bielle (08) et la base (02) étant reliées entre elles par trois bielles oscillantes (07), et la base (02) et la bielle (08) étant reliées aux bielles oscillantes (07) par l'intermédiaire d'articulations (05, 09), les articulations (05) destinées à être reliées à la base (02) et les articulations (09) destinées à être reliées à la bielle (08) étant disposées de manière à délimiter un triangle équilatère (04, 11) dans un plan de bielle (10) et un plan de base,
   **caractérisé en ce que**
   la distance entre les articulations (05, 09) reliées entre elles par l'intermédiaire d'une bielle oscillante (07) est comprise entre 2,3 et 2,7 fois, de préférence 2,5 fois, le rayon d'une circonférence (06) des triangles équilatéraux (04, 11) lorsque le centre de gravité (22) de l'objet (21) à faire pivoter se trouve principalement dans le plan de bielle (10) ou **en**

**ce que** la distance entre les articulations (05, 09) reliées entre elles par l'intermédiaire d'une bielle oscillante (07) est comprise entre 2,05 et 2,3 fois, de préférence $\sqrt{5}$ fois, du rayon d'une circonférence (06) des triangles équilatéraux (04, 11) lorsque le centre de gravité (22) de l'objet (21) à faire pivoter est au-dessus du plan de bielle (10).

2. Dispositif d'inclinaison selon la revendication 1,
**caractérisé en ce que**
les triangles équilatéraux (04, 11) ont une circonférence (06) de rayon identique.

3. Dispositif d'inclinaison selon l'une quelconque des revendications 1 ou la revendication 2,
**caractérisé en ce que**
les articulations (05, 09) de la base (02) et/ou de la bielle (08) comprennent une barre de torsion (20).

4. Dispositif d'inclinaison selon l'une quelconque des revendications 1 à 3,
**caractérisé en ce que**
les bielles oscillantes (07) ont une courbure et une longueur supérieure à la distance entre les articulations (05, 09) reliées entre elles par une bielle oscillante (07).

5. Dispositif d'inclinaison selon l'une quelconque des revendications 1 à 4,
**caractérisé en ce que**
les bielles oscillantes (07) sont formées comme des barres (26) interrompues par un anneau (25), les anneaux (25) des bielles oscillantes (07) ayant de préférence des tailles différentes, en particulier des rayons différents.

6. Dispositif d'inclinaison selon l'une quelconque des revendications 1 à 5,
**caractérisé en ce que**
les bielles oscillantes (07) sont formées comme des anneaux (27) qui comprennent un arc étroit (28) et un arc large (29), les articulations (05, 09) étant disposées aux transitions vers les arcs (28, 29).

7. Dispositif d'inclinaison selon l'une quelconque des revendications 1 à 6,
**caractérisé par**
deux mécanismes d'entraînement (14, 15) indépendants, de préférence identiques, un premier mécanisme d'entraînement (14) inclinant la bielle (08) d'un angle d'inclinaison θ et le deuxième mécanisme d'entraînement (15) faisant pivoter la bielle (08) d'un angle de pivotement φ.

8. Dispositif d'inclinaison selon la revendication 7,
**caractérisé en ce que**
les mécanismes d'entraînement (14, 15) sont formés comme des mécanismes d'entraînement autobloquants (14, 15).

9. Dispositif d'inclinaison selon l'une quelconque des revendications 1 à 8,
**caractérisé par**
un verrouillage en torsion (19) qui relie de manière articulée les centres de gravité (12) et (32) de la bielle (08) et de la base (02) et empêche la bielle (08) de pivoter par rapport à la base (02).

10. Dispositif d'inclinaison selon la revendication 9,
**caractérisé en ce que**
le verrouillage en torsion (19) transfère l'énergie d'entraînement des deux mécanismes d'entraînement (14, 15) à la bielle (08).

11. Dispositif d'inclinaison selon l'une quelconque des revendications 1 à 10,
**caractérisé en ce que**
la bielle (08) a des dispositifs de réception et/ou de fixation pour des masses d'équilibrage interchangeables et/ou mobiles.

12. Utilisation d'un dispositif d'inclinaison selon l'une quelconque des revendications 1 à 11,
pour faire pivoter des objets disposés à proximité de la bielle (08), les objets étant de préférence des modules photovoltaïques, des capteurs solaires, des miroirs ou des antennes plates, ou en remplacement d'un hexapode (plateforme de Stewart), de préférence pour des dispositifs de simulation et/ou des manèges ou comme sous-structure pour un siège, de préférence une chaise ou un tabouret, dont le siège est disposé sur le plan de bielle (10).

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 211315592 U
- WO 2017108997 A1
- CN 202100903 U